Europäisches Patentamt

European Patent Office

Office européen des brevets

(19)

(11) Publication number: **0 181 821 B1**

# EUROPEAN PATENT SPECIFICATION

(12)

(45) Date of publication of patent specification: **08.01.92**  (51) Int. Cl.⁵: **A21D  13/08**

(21) Application number: **85402154.0**

(22) Date of filing: **07.11.85**

(54) **Method and dough compositions for making shelf-stable soft or chewy cookies.**

(30) Priority: **09.11.84 US 669847**

(43) Date of publication of application:
**21.05.86 Bulletin  86/21**

(45) Publication of the grant of the patent:
**08.01.92 Bulletin  92/02**

(84) Designated Contracting States:
**AT BE CH DE FR GB IT LI LU NL SE**

(56) References cited:
**EP-A- 0 031 802**
**EP-A- 0 102 232**
**EP-A- 0 113 056**
**FR-A- 1 584 155**

(73) Proprietor: **NABISCO BRANDS, INC.**
**100 DeForest Avenue**
**East Hanover New Jersey 07936(US)**

(72) Inventor: **Thulin, Robert Raymond**
**378 Van Beekum Place**
**Wyckoff New Jersey 07481(US)**
Inventor: **Ross, Robert Edgar**
**201 Farmingdale Road**
**Wayne New Jersey 07470(US)**
Inventor: **Banks, Lori Jane**
**161 Grand Avenue**
**Hackensack New Jersey 07601(US)**

(74) Representative: **Bonnetat, Christian et al**
**CABINET BONNETAT 23, Rue de Léningrad**
**F-75008 Paris(FR)**

## Description

This invention relates to methods for producing cookies having a soft or chewy texture throughout the cookie. This invention also relates to cookie dough compositions for producing the cookies.

Cookies with a moisture content above 6% by weight are usually soft or chewy and cohesive. To produce cookies which retain enough moisture to be classified as soft or chewy, numerous humectants have been used. Exemplary thereof are raisins, raisin pastes, high fructose corn syrup, corn syrup, glycerine, and mixtures thereof. Without the use of such humectants, cookie doughs which contain sufficient water to compensate for volatilization during baking: 1) do not exhibit sufficient cohesiveness for forming into pieces on conventional commercial scale cookie forming equipment, 2) exhibit raw flavor or color qualities, and 3) most importantly, lose their soft or chewy texture within a week or within a few days even when properly packaged in air-tight packaging. Generally, increasing the humectant content of the cookie dough extends the textural stability of soft or chewy cookies. However, as the humectant content of a cookie dough is increased, undesirable texture, appearance and/or flavor characteristics may appear in the final product and dough machinability tends to be reduced to an unacceptable extent.

For example, while raisins and raisin pastes typically contain 19% by weight water which is held during baking, their flavor and color may be undesirable in certain types of cookies such as butter cookies, vanilla cookies, and the like. Additionally, these humectants tend to contribute localized soft or chewy regions to a cookie rather than a homogeneous soft or chewy texture. Furthermore, these ingredients are relatively expensive for the highly competitive mass-produced cookie market.

Liquid humectants such as high fructose corn syrup, corn syrup, glycerin and molasses are more readily dispersed through a dough for providing a homogeneously soft or chewy texture to the cookies. However, these liquid humectants increase the adherent properties or "stickiness" of cookie doughs. Sticking or adherence of this dough to rotary cutters, reciprocating cutters, cutter aprons, oven belts, and wire cutters place an upper limit on their use in producing extended shelf-stable soft or chewy cookies on a commercial scale. In addition to increasing stickiness, the liquid humectants can result in difficulty in extruding the dough and forming the doughs into pieces. Cookie dough softness and adherency considerations have generally limited the liquid humectant content and water content of cookie doughs such that cookies mass produced from such doughs exhibit shelf-stable soft or chewy textures for periods of only up to about three weeks with proper air-tight packaging.

The present invention provides a method for mass producing cookies having an extended shelf-stable soft or chewy texture throughout for periods of from about six months to one year with proper packaging. The exceptionally long textural stability of the cookies are obtained from a coextruded dough composition which contains a liquid humectant in an amount sufficient to impart the extended shelf-stable soft texture to the cookie. In spite of the high level of liquid humectant, the coextruded dough composition possesses sufficient firmness and cohesiveness to be formed into pieces without sticking or adhering upon dough forming and transferring equipment. The cookies produced from the coextruded dough composition have the appearance of a single dough cookie.

The present invention provides a cookie having an extended shelf-stable soft or chewy texture throughout the cookie which is mass produced from an adherent cookie dough. The adherent cookie dough is coextruded with an outer non-adherent cookie dough. Each of the cookie doughs are bakeable to a soft or chewy texture and comprise a liquid humectant. The amount of liquid humectant in the inner dough is sufficient to impart a shelf-stable soft or chewy texture to the baked outer cookie dough in excess of that attainable by baking the outer dough alone to a shelf-stable soft or chewy texture of the same moisture content. The outer non-adherent cookie dough possesses sufficient firmness and cohesiveness to enable forming of the extrudate rope into pieces without contact between the inner sticky dough and dough forming and transferring equipment. The coextrudate is severed into pieces to enrobe the adherent cookie dough within the nonadherent soft or chewy cookie dough. The pieces are baked to a moisture content of at least 6% by weight of the cookie. The cookies of the present invention are texturally stable and microbially stable for prolonged periods (preferably more than six months) of storage at room temperature when properly packaged.

It is well known that when humectants are added to a cookie dough, the product baked from the dough will possess a plastic, moist and non-hardening crumb structure, which will be retained during storage in conventional packaging for greater than two weeks, and even up to periods of many months. In mass producing cookies having a soft or chewy crumb structure, however, the amount of liquid humectant which can be added to the cookie dough is limited by the adverse effects of reduced formability and increased adhesiveness of the dough.

In the present invention, an adherent cookie dough which is bakeable to a soft or chewy crumb structure is coextruded with a non-adherent cookie dough. The non-adherent cookie dough is also bakeable to a shelf-stable soft or chewy crumb structure. Inclusion of a liquid humectant in the inner sticky dough has been found to dramatically extend the period of time during which the outer non-adherent dough remains soft or chewy. Baking of the non-adherent dough alone to a moisture content of 6%, for example, may result in a soft or chewy shelf life of about three weeks under proper packaging and storage conditions. At this point, the cookie has generally lost sufficient moisture so as to develop a dry or stale mouthfeel throughout a substantial outer portion of the cookie. However, when the same non-adherent dough enrobes the adherent dough and the dough piece is baked to a soft and chewy texture having the same moisture content, i.e. six percent, the portion of the cookie baked from the non-adherent dough retains a soft or chewy texture for unexpectedly pro-longed periods of time, i.e. for periods of from six months to twelve months when packaged under the same conditions.

It is believed that the higher levels of liquid humectant and water which are incorporated into the inner portion of the cookie: 1) inhibits moisture migration, and 2) diminishes the percentage of moisture lost, respectively, from the entire cookie into the head space of the package. It is further believed that some of the humectant initially in the inner adherent dough, migrates to the portion of the cookie baked from the non-adherent cookie dough thereby providing a cookie which retains a soft or chewy texture throughout for prolonged periods.

Additionally, doughs with very high amounts of humectant sugars when baked alone, develop an undesirably overbaked appearance before completion of the baking process. Enrobing of such doughs in a non-adherent dough having a lower amount of reducing sugars eliminates the undesirable discolorization by insulation of the inner dough from high oven temperatures.

A wide variety of food-compatible liquid humectants may be employed for imparting shelf-stable softness or chewiness to the chewy portion of the cookies of the present invention. Liquid humectants which can be employed include sugar and/or non-sugar ingredients which bind moisture in a baked dough. The binding should be such that the equilibrium rate of moisture loss from the baked product to the environment due to the presence of the humectant is slowed to such a degree that a baked product containing the humectant, and having an initial moisture content of at least 6%, retains a soft and pliable texture throughout for at least 2 months, and preferably for at least 6-12 months when the cookie is stored in a closed container.

Suitable liquid humectant sugars include corn syrups, invert syrups, high fructose corn syrups, honey, molasses, as well as mixtures thereof. Aqueous solutions of fructose and/or dextrose or other humectant sugars may be used but are not desireable because of the high cost and hygroscopicity of their crystalline forms. Examples of other humectant sugars include maltose, sorbose, manose, galactose, and the like.

Commercially available high fructose corn syrups are the preferred liquid humectants. They are low in cost, are highly humectant, provide a pleasant sweet taste, and are readily commercially available. They are prepared by the enzymatic isomerization of dextrose containing corn syrups, and typically possess a sugar solids component of 40% to 100% by weight fructose, with the balance of the non-fructose sugar solids being primarily dextrose plus minor amounts of other monosaccharides. The sugar solids content of commercially available high fructose corn syrups typically ranges from 70% to 73%, up to 82% by weight. Commercially available high fructose corn syrups having 40% to 45% by weight of their solids as fructose are preferred from the standpoint of cost. However, commercially available high fructose corn syrups having at least 80% by weight of their solids as fructose are readily available, for example, and may also be used.

In addition to the humectant sugars, a wide variety of liquid humectants or aqueous solutions of humectants which are not sugars or possess a low degree of sweetness relative to sucrose may also be employed in the chewy doughs of this invention. For example, the use of glycerol, sugar alcohols such as mannitol, maltitol, xylitol, and sorbitol, and other polyols as humectants is well known in the art. Additional examples of humectant polyols (e.g. polyhydric alcohols) include humectant glycols, hydrogenated glucose syrups, sugar ester, dextrins, and other starch hydrolyzation products. However, the liquid humectant sugars are preferred because of their sweetness.

The liquid humectant used in the non-adherent cookie dough and in the adherent cookie dough may be the same or different. The amount of liquid humectant used in the non-adherent cookie dough should not render the dough adherent. The amount should preferably be sufficient to impart a shelf stable soft or chewy texture of at least one week to cookies baked from the non-adherent dough alone. Suitable amounts of liquid humectant are from 10% by weight to 50% by weight based upon the weight of the flour in the non-adherent cookie dough, depending upon its water content and the amount of humectant solids, such as fructose. At amounts greater than 50% by weight of liquid humectant, the machinability of the doughs tends to decrease excessively. At amounts of liquid humectant less than 10% by weight, the retention of a soft or chewy texture decreases without any significant improvement in dough machinability. The non-adherent doughs of the present invention, upon squeezing in one's hand, should compact without squeezing between one's fingers and should be readily releasable from one's hand. Generally, liquid humectants having a high humectant sugar content, e.g. above 65% by weight of the liquid humectant are preferred for increased humectancy and avoidance of stickiness. A typical amount of liquid humectant in the non-adherent cookie dough ranges up to 15% by weight based upon the weight of the flour in the non-adherent cookie dough for a high fructose corn syrup having a solids content of 77% by weight and a fructose content of 90% by weight of the solids. For a high fructose corn syrup having a solids content of 72% by weight and a fructose content and dextrose content of 43% and 50% by weight of the solids, respectively, a typical amount ranges from 20% to 50% by weight of liquid humectant, based upon the weight of the flour.

The amount of liquid humectant used in the inner adherent cookie dough should be sufficient to impart a shelf-stable soft or chewy texture to the baked outer cookie dough in excess of that attainable by baking the outer dough alone to a shelf-stable soft or chewy texture of the same moisture content. The adherent cookie doughs suitably contain from 30% by weight to 120% by weight of liquid humectant, based upon the weight of the flour in the adherent cookie dough, depending upon its water content and the amount of humectant solids, such as fructose. At amounts of liquid humectant greater than 120% by weight, the cookie tends to exhibit a dense, gummy mouthfeel rather than a desirable soft or chewy and tender mouthfeel. The soft or chewy texture should be such so as to provide a non-cohesive, readily soluble mouthfeel. The adherent doughs, when squeezed in the hand, do not compact, but rather flow between one's fingers and tend to stick to one's hands. A suitable amount of liquid humectant in the adherent dough ranges, on a flour basis: 1) from 30% to 45% by weight of a high fructose corn syrup having 77% by weight solids and a fructose content of 90% by weight of the solids, and 2) from 65% to 90% by weight of a high fructose corn syrup having 71% by weight solids with the solids being 43% by weight fructose and 50% by weight dextrose.

To promote a tender, non-cohesive soft or chewy crumb structure, particularly when high levels of humectant are used, it is desirable to include one or more emulsifiers and/or pregelatinized starch in the inner, adherent cookie dough. Suitable amounts are up to 3% by weight of one or more emulsifiers and up to 12% by weight of one or more pregelatinized starches, each percent being based upon the weight of the flour. Exemplary of pregelatinized starches are pregelatinized corn, wheat, and waxy maize starch. Typical emulsifiers which can be used include sorbitan monostearate, mono- and/or di-glycerides, poly-oxyethylene sorbitan fatty acid esters, such as polysorbate (polyoxyethylene (20) sorbitan mono-stearate), and sodium stearoyl-2-lactate. The emulsifiers and/or pregelatinized starches may also be included in the outer non-adherent cookie dough.

The initial moisture content of the outer non-adherent soft or chewy dough is adjusted to provide the desired consistency to the dough to enable proper working and shaping of the dough and of the coextrudate. The total moisture content of the inner and outer doughs will include any water included as a separately added ingredient, as well as the moisture provided by flour (which usually contains 12% to 14% by weight moisture), and the moisture content of other dough additives included in the formulation, such as high fructose corn syrup, invert syrups, or other liquid humectants. Taking into account all sources of moisture in the dough, including separately added water, the total initial moisture content of the non-adherent dough should be less than 15% by weight of the dough formulation, exclusive of particulate inclusions such as nuts, raisins, chocolate chips, and the like. At moisture contents above 15% by weight, the dough compositions tend to stick excessively to processing equipment such as conveyors, dough cutters, and the like.

The initial moisture content of the inner adherent soft or chewy cookie dough may be at least 25% by weight more than the moisture content of the non-adherent cookie dough without adversely affecting machinability of the coextruded cookie dough formulation. However, the initial moisture content of the inner adherent cookie dough should be less than 20% by weight of the dough formulation exclusive of particulate inclusions, so as to avoid excessive oven spread.

A non-humectant sugar such as sucrose, may be employed in the adherent cookie dough and/or the non-adherent cookie dough to enhance sweetness of the final product and to control oven spread. However, the amount employed should be such that it does not crystallize to a such a degree that it undesirably detracts from the extended retention of a soft or chewy texture in the baked product. Typical amounts of sucrose range up to 45% by weight, suitably up to 35% by weight, of the flour for each dough.

The flour and shortening employed in the adherent soft or chewy dough and in the non-adherent, soft or chewy enrobing dough of this invention are selected from conventional ingredient lines. The flour component may be any comminuted cereal grain or edible seed meal such as wheat flour, corn flour, corn starch, modified starch, rice flour, potato flour, barley flour, or the like. Wheat flour is preferred. The shortening may be any edible fat or oil or mixtures thereof suitable for baking applications, and may further include conventional food-grade emulsifiers. The shortening may be present in each dough in amounts ranging from 20% to 80% by weight, based upon the weight of the flour.

Each of the doughs may contain from 0% to 5% by weight of a leavening system, based upon the weight of the flour of each dough. The leavening system employed in each dough may be the same or different.

In addition to the foregoing, the soft or chewy adherent dough and the non-adherent enrobing dough may include other additives conventionally employed in cookie products. Exemplary thereof are milk products or milk by-products, egg products or egg by-products, cocoa, vanilla, cereal (oatmeal), as well as inclusions such as nuts, raisins, coconut, flavor chips, such as chocolate chips, butterscotch chips, caramel chips, and the like.

The chewy cookie adherent dough and the non-adherent chewy cookie dough can each be prepared in conventional manner using a creaming stage and a dough forming stage. Flavor chips are added to each dough with minimal mixing so as to avoid smearing thereof into the dough. The adherent cookie dough is preferably cooled to 15.6°C (60°F) to 18.3°C (65°F) using $CO_2$ snow to facilitate its transfer to the coextruder.

The two doughs may be combined by coextrusion through concentric dies to obtain a coextrudate rope with the soft or chewy adherent dough inside and the soft or chewy non-adherent cookie dough outside. The coextrudate rope is cut into pieces using a reciprocating cutter which severs the rope and stretches the outer dough to close the end portions of the rope so as to obtain an enrobed dough piece which is bakeable to the cookie of the present invention.

The dough pieces bakeable to a soft or chewy texture throughout, suitably have a weight ratio of the soft or chewy adherent dough (or filling) to the non-adherent dough (or casing) within the range of from 0.80 to 1.2, approximately equal amounts of each dough being preferred.

The time and temperature of baking are adjusted in accordance with conventional techniques to provide a moisture content in the baked product of 6% or above. The preferred moisture content ranges from 7% to 8%, based upon the weight of the baked product. The water activity of the baked product should be less than 0.7, preferably less than or equal to 0.6 to assure microbial shelf stability. While baking time and temperatures will vary for different dough formulations, oven type, et., in general, commercial cookie baking times may range from 5 minutes to 15 minutes, and baking temperatures for cookie products may range from 121°C (250°F) to 260°C (500°F).

As employed in the context of the present invention, the term "chewy" is intended to define textures which possess a discernible degree of plasticity. Chewiness also connotes impressions of softness and moistness. Crispness and chewiness can be described in terms of taste panel tests which take as standards the texture of fresh saltine crackers having a moisture content of 2% (rating of 0) and a freshly baked cookie having a distinctly chewy texture throughout (rating of 10):

i.e., chewy cookies prepared in accordance with the following recipe:

| | |
|---|---|
| 0.184 1. (2/3) | sugar |
| 0.059 1. (1/4) | butter or regular margarine |
| 4.929 ml. (1 tsp.) | ground ginger |
| 2.465 ml. (1/2 tsp.) | ground cinnamon |
| 2.465 ml. (1/2 tsp.) | baking soda |
| 2.465 ml. (1/2 tsp.) | salt |
| 2.465 ml. (1/2 tsp.) | vanilla |
| 1 | egg |
| 0.138 1. (1/2 c.) | honey |
| 0.355 1. (1 1/2 c.) | sifted flour |

The cookies are prepared by combining 0.184 liters (2/3 cup) of sugar, butter, ginger, cinnamon, baking soda, salt and vanilla in a large mixing bowl and creaming the ingredients until they are light and fluffy. Next the eggs are added and beat in until the mixture is very fluffy. The honey is then blended in, followed by the blending in of the flour a little at a time. The dough is dropped by teaspoonfuls 6.35 cm (2 1/2 inches) apart onto a lightly greased baking sheet, baked at 176.7°C (350°F) for 10 to 15 minutes until lightly browned and removed at once from the baking sheet to racks to cool thoroughly.

Employing the rating scale described above, the product of this invention preferably has a rating of at least 3 and most preferably at least 5 throughout its extended shelf life of from 6 months to 1 year. The regions baked from the adherent dough and from the non-adherent cookie dough should show a difference in ratings of less than two units, and most preferably less than one unit throughout the extended shelf life of the cookie. Slight differences in texture may occur due to normal crust formation caused by higher temperatures at the cookie surface during baking. However, such differences are considered as acceptable.

The cookie dough compositions of the present invention may be used for the production of drop-type cookies, such as chocolate chip cookies, oatmeal cookies, peanut butter cookies, sugar cookies, and the like.

The present invention is further illustrated in the following examples where all parts, ratios, and percentages are by weight, and all temperatures are in °C and °F, unless otherwise stated:

EXAMPLE 1

A soft or chewy textured chocolate chip cookie is prepared by coextruding an inner adherent cookie dough bakeable to a soft or chewy texture with an outer non-adherent cookie dough bakeable to a soft or chewy texture through a concentric die into a coextrudate rope. The rope is severed with a reciprocating cutter having hemispherically shaped dough forming sections into enrobed dough pieces. The weight of the inner ball of dough is about equal to the weight of the outer nonadherent dough. The ingredients and their relative amounts used to prepare the non-adherent casing dough bakeable to a soft or chewy texture are:

| Casing Ingredients | Amount (Kilograms) | Amount (Pounds) |
|---|---|---|
| flour (12% H$_2$O by weight) | 45.40 kg | (100) |
| high fructose corn syrup (about 72% solids, 42% fructose, 50% dextrose) | 13.62 kg | (30) |
| granulated sugar | 11.80 kg | (26) |
| molasses (25% by weight H$_2$O) | 1.36 kg | (3) |
| hydrogenated vegetable shortening | 24.97 kg | (55) |
| sodium bicarbonate | 0.58 kg | (1.25) |
| calcium phosphate, monobasic | 0.11 kg | (0.25) |
| water | 3.63 kg | (8) |
| chocolate drops (4800 count) | 22.70 kg | (50) |
| minor flavoring and texturizing ingredients (dried eggs, salt vanilla, caramel) | 1.36 kg | (3) |

The casing dough bakeable to a soft or chewy texture is prepared by first mixing half of the granulated sugar with the shortening and minor texturing and flavoring ingredients until a smooth consistency is obtained. Next, the molasses, water, and high fructose corn syrup are added to the foregoing and mixed. The flour is blended with the leavener and the remaining granulated sugar to form a dough. As a final step, the chocolate drops are blended into the dough at slow speed.

The ingredients and their relative amounts used to prepare the adherent dough (filling) bakeable to a soft or chewy texture are:

| Filling Ingredients | Amount (Kilograms-grams) | Amount (pounds-ounces) |
|---|---|---|
| flour (about 12% $H_2O$ by weight) | 45.40 - 0 | (100 - 0) |
| chocolate drops (4200 count) | 34.05 - 0 | (75 - 0) |
| sucrose | 11.35 - 0 | (25 - 0) |
| vegetable shortening | 17.25 - 0 | (38 - 0) |
| high fructose corn syrup (about 72% solids, 42% fructose, 50% dextrose) | 38.59 - 0 | (85 - 0) |
| milk powder | 1.82 - 0 | (4 - 0) |
| ammonium bicarbonate | 0 - 113.40 | (0 - 4) |
| sodium bicarbonate | 0.45 - 113.40 | (1 - 4) |
| calcium phosphate, monobasic | 0 - 141.75 | (0 - 5) |
| modified corn starch | 2.63 - 226.80 | (8 - 8) |
| dried eggs | 0.45 - 226.80 | (1 - 8) |
| flavorants and other minor ingredients | 0.45 - 368.55 | (1 - 13) |
| water | 5.90 - 0 | (13 - 0) |

The chewy filler cookie dough is prepared by first mixing at a slow speed the sucrose and the shortening, to achieve a homogeneous mixture. The modified starch, milk powder, eggs and flavorants are mixed in and the ammonium bicarbonate and water are added while mixing at a slow mixing speed. The high fructose corn syrup is added with mixing and with the application of $CO_2$ to cool it so as to yield a final dough temperature of 15.6°C to 16.7°C (60 to 62°F). This is followed by the addition with mixing of the flour, sodium bicarbonate and calcium phosphate, monobasic for about three minutes. As a final step, the chocolate chips are blended into the dough at 15.6°C (60°F) and at a slow speed.

The enrobed cookie preform is then prepared, and the composite dough is baked to an end point moisture content of 7%, and cooled at room temperature. The cookie is stored in a closed container at room temperature until the moisture in the cookie has equilibrated between the outer and inner chewy regions of the cookie. The outer dough portion and the inner dough portion possess a soft and plastic crumb matrix having a distinctly leavened appearance.

EXAMPLE 2

Soft or chewy textured cookies are made as in Example 1 except 34.05 kg(75 lbs.) of the high fructose corn syrup are used instead of 38.59 kg(85 lbs.) in the adherent filler dough.

EXAMPLE 3

Soft or chewy textured cookies are made as in Example 1 except the ingredients and their relative amounts for the casing dough and the filler dough are:

| Casing Ingredients | Amount (Kilograms) | Amount (Pounds) |
|---|---|---|
| flour (about 12% by weight $H_2O$) | 45.40 | (100) |
| high fructose corn syrup (about 72% solids, 42% fructose, 50% dextrose) | 13.62 | (30) |
| granulated sugar | 11.80 | (26) |
| molasses (about 25% by weight $H_2O$) | 0.91 | (2) |
| honey (about 17% by weight $H_2O$) | 1.36 | (3) |
| hydrogenated vegetable shortening | 24.97 | (55) |
| sodium bicarbonate | 0.57 | (1.25) |
| calcium phosphate, monobasic | 0.11 | (0.25) |
| water | 3.63 | (8) |
| chocolate drops | 16.34 | (36) |
| minor flavoring and texturizing ingredients (dried eggs, salt, vanilla, and caramel) | 2.04 | (4.5) |

| Filling Ingredients | Amount (Kilograms-grams) | Amount (pounds-ounces) |
|---|---|---|
| flour (about 12% H₂O by weight) | 45.40 – 0 | (100 – 0) |
| chocolate drops (4200 count) | 26.33 – 0 | (58 – 5) |
| sucrose | 11.35 – 0 | (25 – 0) |
| vegetable shortening | 17.25 – 0 | (38 – 0) |
| high fructose corn syrup (about 72% solids, 42% fructose, 50% dextrose) | 31.78 – 0 | (70 – 0) |
| honey (about 17% by weight H₂O) | 1.36 – 226.80 | (3 – 8) |
| milk powder | 1.82 – 0 | (4 – 0) |
| ammonium bicarbonate | 0 – 170.28 | (0 – 6) |
| sodium bicarbonate | 0.45 – 113.40 | (1 – 4) |
| calcium phosphate, monobasic | 0 – 141.75 | (0 – 5) |
| modified corn starch | 3.63 – 226.80 | (8 – 8) |
| dried eggs | 0.45 – 226.80 | (1 – 8) |
| flavorants and other minor ingredients | 0.45 – 311.85 | (1 – 11) |
| water | 4.99 – 0 | (11 – 0) |

EXAMPLE 4

Soft or chewy textured cookies are made as in Example 1 except in the casing dough: 1) 6.81 kg(15 lbs.) of high fructose corn syrup (77% solids, 90% fructose) are substituted for the 13.62 kg(30 lbs.) of high fructose corn syrup, and 2) the amount of water is increased to 4.54 kg(10 lbs.).

**Claims**

1. A method for producing a cookie having an extended shelf stable soft or chewy texture throughout the cookie, including coextruding an inner cookie dough and an outer cookie dough to obtain a coextrudate, severing the coextrudate into pieces to enrobe the inner cookie dough and baking the pieces to a moisture content of at least 6% by weight of the cookie, characterized in that the inner dough is made adherent by adding an amount of liquid humectant ranging from 30 to 120 percent by weight of the flour content of the inner cookie dough, further characterized in that the outer cookie dough is made non-adherent by adding an amount of liquid humectant ranging from 10 to 50 percent by weight of the flour content of the outer cookie dough, the amount of liquid humectant added to the inner dough being sufficient to impart a shelf stable soft or chewy texture to the baked outer cookie dough in excess of that attainable by baking the outer dough alone to a moisture content of 6% by weight of the cookie.

2. A method as claimed in claim 1 further characterized in that an amount of sucrose is added to the outer cookie dough ranging up to 45% by weight of the flour content in the outer cookie dough.

3. A method as claimed in claim 2 further characterized in that the inner and outer cookie doughs are prepared with the same humectant.

4. The method as claimed in claim 3 further characterized in that the liquid humectant includes a high

9

fructose corn syrup.

5. The method as claimed in claim 4 further characterized in that the high fructose corn syrup has solids content of 68 to 82 percent by weight.

6. The method as claimed in claim 5 further characterized in that the high fructose corn syrup has solids content which is at least 80% by weight fructose.

7. The method as claimed in claim 1 further characterized in that the liquid humectant of each inner and outer cookie dough is prepared as a mixture of liquid humectants.

8. The method as claimed in claim 1 further characterized in that the inner adherent cookie dough is prepared by adding up to 12 percent by weight of a pregelatinized starch based upon the weight of the flour.

9. The method as claimed in claim 8 further characterized in that the inner adherent cookie dough is prepared by adding up to 3 percent by weight of an emulsifier based upon the weight of the flour.

10. The method as claimed in claim 1 further characterized in that the inner adherent cookie dough and the outer non-adherent cookie dough are coextruded at a weight ratio of the inner to outer cookie dough of 0.8 to 1.2.

11. The method as claimed in claim 10 further characterized in that the inner adherent cookie dough is prepared with a moisture content at least 25 percent by weight greater than the moisture content of the outer non-adherent cookie dough.

12. The method as claimed in claim 11 further characterized in that the outer non-adherent cookie dough is prepared with a moisture content of less than 15 percent by weight of the outer non-adherent cookie dough.

13. The method as claimed in claim 12 further characterized in that chocolate chips are added to either the inner or outer cookie dough prior to extrusion to obtain a chocolate chip cookie.

14. A soft cookie having an extended shelf-stable soft or chewy texture throughout the cookie characterized in that the cookie is obtained by the method of claim one.

15. The cookie as claimed in claim 14 further characterized in that the cookie is a chocolate chip cookie.

16. The cookie as claimed in claim 14 further characterized in that the liquid humectant in each dough includes a high fructose corn syrup.

17. The cookie as claimed in claim 16 further characterized in that there is a water activity of less than or equal to 0.6.

18. A cookie dough composition for producing cookies having an extended shelf-stable soft or chewy texture throughout the cookie, having an inner cookie dough enrobed by an outer cookie dough, each dough having flour, shortening or fat, characterized in that the inner cookie dough is adherent and has a liquid humectant for imparting chewiness to the baked dough in an amount ranging from 30 to 120 weight percent based on the weight of the flour content in the inner adherent cookie dough, further characterized in that the outer cookie dough is non-adherent and has a liquid humectant in an amount ranging from 10 to 50 weight percent based on the weight of the flour content in the outer adherent cookie dough, and further characterized in that baking of the enrobed adherent dough imparts a shelf-stable soft or chewy texture to the baked outer non-adherent cookie dough in excess of that attainable by baking the outer dough alone to the same moisture content.

19. A cookie dough composition as claimed in claim 18 further characterized in that the liquid humectant of each dough includes a high fructose corn syrup and the non-adherent cookie dough includes sucrose in an amount up to 45 percent by weight of the flour of the non-adherent dough.

**20.** A cookie dough composition as claimed in claim 19 further characterized in that the weight ratio of the adherent dough to the non-adherent dough ranges from 0.80 to 1.2, the moisture content of the non-adherent dough is less than 15 percent by weight of the non-adherent dough, and the moisture content of the adherent dough is at least 25 percent by weight more than the moisture content of the non-adherent dough.

**21.** A cookie dough composition as claimed in claim 20 further characterized in that the adherent cookie dough includes pregelatinized starch and an emulsifier.

**22.** A cookie dough composition as claimed in claim 21 further characterized in that the composition has chocolate chips.

**23.** A cookie dough composition as claimed in claim 21 further characterized in that the solids content of the high fructose corn syrup is at least 80 percent by weight fructose.

**Revendications**

**1.** Procédé pour produire un biscuit ayant une texture tendre ou qu'on peut mâchonner, stable au stockage de façon prolongée, dans tout le biscuit, incluant la coextrusion d'une pâte interne pour biscuits et d'une pâte externe pour biscuits pour obtenir un coextrudat, la découpe du coextrudat en morceaux pour enrober la pâte interne pour biscuits et la cuisson des morceaux à une teneur en humidité d'au moins 6% en poids du biscuit,
caractérisé en ce que la pâte interne est rendue adhérente en ajoutant une quantité d'humectant liquide comprise entre 30 et 120% en poids de la teneur en farine de la pâte interne pour biscuits, caractérisé en outre en ce que la pâte externe pour biscuits est rendue nonadhérente en ajoutant une quantité d'humectant liquide comprise entre 10 et 50% en poids de la teneur en farine de la pâte externe pour biscuits, la quantité de l'humectant liquide ajouté à la pâte interne étant suffisante pour impartir une texture tendre ou qu'on peut mâchonner, stable au stockage, à la pâte externe cuite pour biscuits en plus de ce que l'on peut obtenir en cuisant la pâte externe seule à une teneur en humidité de 6% en poids du biscuit.

**2.** Procédé selon la revendication 1,
caractérisé de plus en ce qu'une quantité de sucrose est ajoutée à la pâte externe pour biscuits s'élevant jusqu'à 45% en poids de la teneur en farine dans la pâte externe pour biscuits.

**3.** Procédé selon la revendication 2,
caractérisé de plus en ce que les pâtes pour biscuits interne et externe sont préparées avec le même humectant.

**4.** Procédé selon la revendication 3,
caractérisé de plus en ce que l'humectant liquide inclut un sirop de maïs à teneur élevée en fructose.

**5.** Procédé selon la revendication 4,
caractérisé de plus en ce que le sirop de maïs à teneur élevée en fructose présente une teneur en matières solides de 68 à 82% en poids.

**6.** Procédé selon la revendication 5,
caractérisé de plus en ce que le sirop de maïs à teneur élevée en fructose présente une teneur en matières solides qui est au moins de 80% en poids de fructose.

**7.** Procédé selon la revendication 1,
caractérisé de plus en ce que l'humectant liquide de chaque pâte interne et externe pour biscuits est préparé en tant que mélange d'humectants liquides.

**8.** Procédé selon la revendication 1,
caractérisé de plus en ce que la pâte interne adhérente pour biscuits est préparée en ajoutant jusqu'à 12% en poids d'un amidon prégélatinisé en se basant sur le poids de la farine.

9. Procédé selon la revendication 8,
caractérisé de plus en ce que la pâte interne adhérente pour biscuits est préparée en ajoutant jusqu'à 3% en poids d'un émulsifiant en se basant sur le poids de la farine.

10. Procédé selon la revendication 1,
caractérisé de plus en ce que la pâte interne adhérente pour biscuits et la pâte externe non adhérente pour biscuits sont coextrudées à un rapport pondéral de la pâte pour biscuits interne à la pâte pour biscuits externe de 0,8 à 1,2.

11. Procédé selon la revendication 10,
caractérisé de plus en ce que la pâte interne adhérente pour biscuits est préparée avec une teneur en humidité au moins 25% en poids plus grande que la teneur en humidité de la pâte externe non adhérente pour biscuits.

12. Procédé selon la revendication 11,
caractérisé de plus en ce que la pâte externe non adhérente pour biscuits est préparée avec une teneur en humidité inférieure à 15% en poids de la pâte externe non adhérente pour biscuits.

13. Procédé selon la revendication 12,
caractérisé de plus en ce que des copeaux de chocolat sont ajoutés soit à la pâte pour biscuits interne ou à la pâte pour biscuits externe avant l'extrusion pour obtenir un biscuit comportant des copeaux de chocolat.

14. Biscuit tendre ayant une texture tendre ou qu'on peut mâchonner, stable au stockage de façon prolongée, dans tout le biscuit,
caractérisé en ce que le biscuit est obtenu par le procédé de la revendication 1.

15. Biscuit selon la revendication 14,
caractérisé de plus en ce que le biscuit est un biscuit comprenant des copeaux de chocolat.

16. Biscuit selon la revendication 14,
caractérisé de plus en ce que l'humectant liquide dans chaque pâte inclut un sirop de maïs à teneur élevée en fructose.

17. Biscuit selon la revendication 16,
caractérisé de plus en ce que l'activité de l'eau est inférieure ou égale à 0,6.

18. Composition de pâte pour biscuits pour produire des biscuits ayant une texture tendre ou qu'on peut mâchonner, stable au stockage de façon prolongée, dans tout le biscuit, ayant une pâte interne pour biscuits enrobée par une pâte externe pour biscuits, chaque pâte comportant de la farine, de la matière grasse ou de la graisse,
caractérisée en ce que la pâte interne pour biscuits est adhérente et présente un humectant liquide, pour impartir un caractère tendre à la pâte cuite, en une quantité comprise entre 30 et 120% en poids, en se basant sur le poids de la teneur en farine dans la pâte interne adhérente pour biscuits, caractérisée de plus en ce que la pâte externe pour biscuits est non adhérente et présente un humectant liquide en une quantité comprise entre 10 et 50% en poids, en se basant sur le poids de la teneur en farine dans la pâte externe adhérente pour biscuits, et caractérisée de plus en ce que la cuisson de la pâte adhérente enrobée impartit une texture tendre ou qu'on peut mâchonner, stable au stockage, à la pâte non adhérente externe cuite pour biscuits, en plus de ce qui peut être obtenu en cuisant la pâte externe seule a la même teneur en humidité.

19. Composition de pâte pour biscuits selon la revendication 18,
caractérisée de plus en ce que l'humectant liquide de chaque pâte inclut un sirop de maïs à teneur élevée en fructose, et la pâte non adhérente pour biscuit inclut du sucrose en une quantité jusqu'à 45% en poids de la farine de la pâte non adhérente.

20. Composition de pâte pour biscuits selon la revendication 19,
caractérisée de plus en ce que le rapport pondéral de la pâte adhérente à la pâte non adhérente est

## EP 0 181 821 B1

compris entre 0,80 et 1,2, la teneur en humidité de la pâte non adhérente est inférieure à 15% en poids de la pâte non adhérente, et la teneur en humidité de la pâte adhérente est au moins 25% en poids supérieure à la teneur en humidité de la pâte non adhérente.

21. Composition de pâte pour biscuits selon la revendication 20,
caractérisée de plus en ce que la pâte adhérente pour biscuits inclut de l'amidon prégélatinisé et un émulsifiant.

22. Composition de pâte pour biscuits selon la revendication 21,
caractérisée de plus en ce que la composition présente des copeaux de chocolat.

23. Composition de pâte pour biscuits selon la revendication 21,
caractérisée de plus en ce que la teneur en matières solides du sirop de maïs à teneur élevée en fructose est au moins de 80% en poids de fructose.

**Patentansprüche**

1. Verfahren zur Herstellung eines Kekses mit verlängert lagerfähiger, weicher oder kaubarer Textur im gesamten Keks, einschließlich Koextrudieren eines inneren Keksteiges und eines äußeren Keksteiges, um ein Koextrudat zu erhalten, Teilen des Koextrudats in Stücke, um den inneren Keksteig zu umkleiden und Backen der Stücke bis zu einem Feuchtegehalt von wenigstens 6 Gew.-% des Kekses, dadurch gekennzeichnet, daß der innere Teig dadurch anliegend gemacht wird, das eine Menge von flüssigem Feuchtemittel im Bereich von 30 bis 120 Gew.-% des Mehlgehaltes des inneren Keksteiges zugegeben wird, weiterhin dadurch gekennzeichnet, daß der äußere Keksteig dadurch nicht anliegend gemacht wird, daß eine Menge flüssigen Feuchtemittels im Brei von 10 bis 50 Gew.-% des Mehlgehaltes des äußeren Keksteiges zugegeben wird, wobei die dem inneren Teig zugegebene Menge an flüssigem Feuchtemittel ausreichend ist, um dem gebackenen äußeren Keksteig eine lagerfähige weiche oder kaubare Textur zu verleihen, die besser ist als diejenige, die beim Backen des äußeren Teiges allein bis zu einem Feuchtegehalt von 6 Gew.-% des Kekses erreichbar ist.

2. Verfahren nach Anspruch 1, weiterhin dadurch gekennzeichnet, daß dem äußeren Keksteig Sucrose in einer Menge von bis zu 45 % Gew.-% des Mehlgehaltes im äußeren Keksteig zugegeben wird.

3. Verfahren nach Anspruch 2, weiterhin dadurch gekennzeichnet, daß innerer und äußerer Keksteig mit dem gleichen Feuchtemittel hergestellt werden.

4. Verfahren nach Anspruch 3, weiterhin dadurch gekennzeichnet, daß das flüssige Feuchtemittel Maissirup mit hohem Fructoseanteil enthält.

5. Verfahren nach Anspruch 4, weiterhin dadurch gekennzeichnet, daß der Maissirup mit hohem Fructoseanteil einen Festsubstanzgehalt von 68 bis 82 Gew.-% aufweist.

6. Verfahren nach Anspruch 5, weiterhin dadurch gekennzeichnet, daß der Maissirup mit hohem Fructoseanteil einen Festsubstanzgehalt aufweist, der wenigstens zu 80 Gew.-% Fructose ist.

7. Verfahren nach Anspruch 1, weiterhin dadurch gekennzeichnet, daß das flüssige Feuchtemittel sowohl des inneren als auch des äußeren Keksteiges als Mischung von flüssigen Feuchtemitteln hergestellt wird.

8. Verfahren nach Anspruch 1, weiterhin dadurch gekennzeichnet, daß der innere anliegende Keksteig unter Hinzufügen von bis zu 12 Gew.-% von vorgelatinierter Stärke, bezogen auf das Mehlgewicht, hergestellt ist.

9. Verfahren nach Anspruch 8, weiterhin dadurch gekennzeichnet, daß der innere anliegende Keksteig unter Beigabe von bis zu 3 Gew.-% eines Emulgators, bezogen auf das Mehlgewicht, hergestellt ist.

10. Verfahren nach Anspruch 1, weiterhin dadurch gekennzeichnet, daß der innere anliegende Keksteig und der äußere nicht anliegende Keksteig mit einem Gewichtsverhältnis von innerem zu äußerem Keksteig

13

EP 0 181 821 B1

von 0,8 bis 1,2 koextrudiert werden.

11. Verfahren nach Anspruch 10, weiterhin dadurch gekennzeichnet, daß der innere anliegende Keksteig mit einem Feuchtegehalt hergestellt wird, der wenigstens 25 % Gew.-% größer als der Feuchtegehalt des äußeren nicht anliegenden Keksteigs ist.

12. Verfahren nach Anspruch 11, weiterhin dadurch gekennzeichnet, daß der äußere nicht anliegende Keksteig mit einem Feuchtegehalt hergestellt wird, der kleiner als 15 Gew.-% des äußeren nicht anliegenden Keksteigs ist.

13. Verfahren nach Anspruch 12, weiterhin dadurch gekennzeichnet, daß Schokoladenchips vor der Extrusion entweder dem inneren oder dem äußeren Keksteig zugegeben werden, um einen Schokoladenchipskeks zu erhalten.

14. Weichkeks mit weicher oder kaubarer Textur im gesamten Keks mit verlängerter Lagerfähigkeit, dadurch gekennzeichnet, daß der Keks mit dem Verfahren nach Anspruch 1 erhalten wird.

15. Keks nach Anspruch 14, weiterhin dadurch gekennzeichnet, daß er ein Schokoladenchipskeks ist.

16. Keks nach Anspruch 14, weiterhin dadurch gekennzeichnet, daß das flüssige Feuchtemittel in jedem Teig Maissirup mit hohem Fructoseanteil enthält.

17. Keks nach Anspruch 16, weiterhin dadurch gekennzeichnet, daß eine Wasseraktivität kleiner oder gleich 0,6 vorliegt.

18. Keksteigzusammensetzung zur Herstellung von Keksen weicher oder kaubarer Textur im gesamten Keks und verlängerter Lagerfähigkeit mit einem inneren Keksteig, der von einem äußeren Keksteig umkleidet ist, wobei jeder Teig Mehl, Backfett oder Fett aufweist, dadurch gekennzeichnet, daß der innere Keksteig anliegend ist und ein flüssiges Feuchtemittel in einer Menge von 30 bis 120 Gew.-% bezogen auf das Gewicht des Mehlanteils im inneren, anliegenden Keksteig aufweist, um dem gebackenen Teig Kaubarkeit zu verleihen, weiterhin dadurch gekennzeichnet, daß der äußere Keksteig nichtanliegend ist und ein flüssiges Feuchtemittel in einer Menge von 10 bis 50 Gew.-% bezogen auf das Gewicht des Mehlanteils im äußeren anliegenden Keksteig, und weiterhin dadurch gekennzeichnet daß durch das Backen des umkleideten anliegenden Teigs dem gebackenen äußeren nichtanliegenden Keksteig eine weiche oder kaubare Textur mitgeteilt ist, die länger lagerbar ist als diejenige, die durch Backen des äußeren Teigs allein bis zum gleichen Feuchtegehalt erzielbar ist.

19. Keksteigzusammenstellung nach Anspruch 18, weiterhin dadurch gekennzeichnet, daß das flüssige Feuchtemittel in jedem Teig Maissirup mit hohem Fructoseanteil aufweist und der nichtanliegende Keksteig Sucrose in einer Menge von bis zu 45 % Gew.-% des Mehles des nichtanliegenden Teiges enthält.

20. Keksteigzusammenstellung nach Anspruch 19, weiterhin dadurch gekennzeichnet, daß das Gewichtsverhältnis von anliegendem zu nichtanliegendem Teig 0,80 bis 1,2 beträgt, der Feuchtegehalt des nichtanliegenden Teigs kleiner als 15 Gew.-% des nichtanliegenden Teigs ist und der Feuchtegehalt des anliegenden Teigs wenigstens 25 Gew.-% größer als der Feuchtegehalt des nichtanliegenden Teigs ist.

21. Keksteigzusammensetzung nach Anspruch 20, weiterhin dadurch gekennzeichnet, daß der anliegende Keksteig vorgelatinierte Stärke und einen Emulgator aufweist.

22. Keksteigzusammensetzung nach Anspruch 21, weiterhin dadurch gekennzeichnet, daß die Zusammensetzung Schokoladenchips aufweist.

23. Keksteigzusammensetzung nach Anspruch 21, weiterhin dadurch gekennzeichnet, daß der Festsubstanzgehalt des Maissirups mit hohem Fructoseanteil wenigstens 80 Gew.-% Fructose ist.

14